# FASCICULE DE BREVET EUROPEEN

(11) **EP 2 633 748 B1**
(45) Date de publication et mention de la délivrance du brevet: **16.09.2015**
(21) Numéro de dépôt: 13155037.8
(22) Date de dépôt: 13.02.2013
(51) Int. Cl.: A01D 78/12

(54) **Machine de fenaison**
Heuwerbungsmaschine
Haymaking machine

(30) Priorité: 29.02.2012 FR 1251835
(43) Date de publication de la demande: 04.09.2013
(73) Titulaire: KUHN S.A., 67700 Saverne (FR)
(72) Inventeur: Speich, Cédric, 67500 Haguenau (FR)

(56) Documents cités:
- DE-A1- 19 746 216
- DE-U1-202009 014 404
- FR-A1- 2 386 248
- GB-A- 1 278 450

## Description

La présente invention se rapporte à un rotor pour une machine de fenaison, le rotor comportant un boîtier entraîné en rotation lors du travail autour d'un axe de rotation dirigé vers le haut et au moins un bras oscillant disposé dans un plan sensiblement perpendiculaire à l'axe de rotation, lequel bras oscillant comportant au moins deux parties, une partie interne liée au boîtier et une partie externe portant des outils de travail, l'une des parties interne et externe comportant une portion engageante pouvant s'engager suivant un axe longitudinal partiellement à l'intérieur d'un orifice d'une portion engagée de l'autre des parties interne et externe, la portion engageante et la portion engagée comportant chacune au moins un trou orienté perpendiculairement à l'axe longitudinal et pouvant être reliées entre elles au moyen d'un dispositif de liaison, lequel dispositif de liaison comportant au moins un élément fileté présentant un axe géométrique et muni d'un épaulement, lequel élément fileté traversant chaque trou des portions engageante et engagée.

Sur les rotors connus de ce genre, la réalisation du bras oscillant en au moins deux parties, à savoir la partie interne et la partie externe, est justifiée par les contraintes de conditionnement et par les contraintes de réparation du bras en cas de choc au travail (voir DE 1974 46216 A1). Pour le conditionnement, le rotor est stocké par exemple en palette. Pour minimiser les coûts de transport, il est souhaitable de réduire la taille du rotor. Ainsi, la partie interne reste liée au boîtier tandis que la partie externe est séparée de la partie interne. Pendant le travail d'andainage, les outils de travail peuvent rencontrer des obstacles tels que des pierres, ce qui génère sur le bras d'importantes contraintes mécaniques. En cas de choc violent, le bras est conçu pour que la partie externe plie sous l'effort, tandis que la partie interne reste intacte. Ainsi, il suffit à l'utilisateur de la machine de démonter la partie externe de la partie interne, et de redresser ou remplacer la partie externe, pour remettre la machine en état de fonctionner. Une telle opération est simple et peu coûteuse.

L'élément fileté, servant à lier les parties interne et externe, est, par exemple, formé par une vis à tête carrée ou hexagonale qui traverse les portions engageante et engagée de part en part, et coopère avec un écrou pour former un boulon. Ce boulon est serré sur la portion engagée de manière à assurer le maintien de la portion engageante à l'intérieur de la portion engagée pendant la rotation du rotor. Le boulon est serré à un couple qui doit d'une part éviter son desserrage inopiné, d'autre part déformer la portion engagée suivant l'axe géométrique pour qu'elle vienne serrer la portion engageante.

Au montage, il peut exister un jeu important entre les portions, de manière à ce que la portion engageante puisse s'engager facilement à l'intérieur de la portion engagée. Dans ce cas, le serrage du boulon à un couple, permettant d'éviter son desserrage inopiné, n'est pas suffisant pour que la portion engagée vienne serrer la portion engageante. Le rattrapage du jeu important de montage nécessite un couple plus élevé. Or, la plupart du temps, l'utilisateur de la machine emploie l'outillage standard qui se trouve à portée de la main, par exemple une classique clé plate. Un tel outillage ne permet pas de serrer au couple requis avec une bonne précision. Il subsiste alors un jeu de fonctionnement entre les portions, lequel entraîne une usure prématurée de la machine. L'utilisateur peut être tenté de supprimer ce jeu en serrant le boulon avec beaucoup plus de force, en montant par exemple une rallonge sur la clé de serrage. Parce que cette manière de procéder ne permet pas de doser l'effort, les portions engageante et engagée se retrouvent fortement déformées, ce qui rend leur démontage ultérieur difficile voire impossible.

A l'inverse, un jeu de montage plus faible entre les portions peut être préféré, de sorte qu'un couple de serrage relativement faible, réalisable par l'utilisateur, permette de serrer la portion engagée contre la portion engageante. Dans ce cas, le couple ainsi réalisé est inférieur au couple requis pour éviter un desserrage inopiné du boulon, ce qui peut entraîner sa perte et le détachement de la partie externe du bras oscillant. De ce fait, la sécurité d'utilisation de la machine n'est pas optimale. Au cas où le boulon est serré au couple requis pour éviter ledit desserrage inopiné, la déformation des portions engageante et engagée, qui résulte de ce serrage, est telle qu'elle rend difficile, voire impossible, le coulissement de la portion engageante à l'intérieur de la portion engagée en vue du démontage. L'utilisation de la machine s'en trouve de fait compliquée.

La présente invention a pour but de proposer un rotor pour une machine de fenaison qui ne présente pas les inconvénients précités.

A cet effet, une importante caractéristique de l'invention réside dans le fait que le dispositif de liaison comporte un insert avec au moins un taraudage pouvant être disposé dans une partie intérieure de la portion engageante, que l'élément fileté est vissé dans ledit taraudage et que l'épaulement dudit élément fileté s'appuie sur la portion engagée de manière à serrer la portion engagée contre la portion engageante suivant l'axe géométrique.

Ainsi, le serrage de la portion engagée contre la portion engageante ne requiert pas, ou que peu, de déformation de ces portions. Un jeu de montage important peut donc être envisagé pour garantir un coulissement aisé de la portion engageante dans la portion engagée. Le montage du bras est donc facile. Le serrage par l'utilisateur à un couple, évitant le desserrage inopiné du dispositif de liaison, assure en même temps l'absence de jeu de fonctionnement, suivant l'axe géométrique, entre l'insert, la portion engageante et la portion engagée. L'invention garantit donc simultanément la sécurité d'utilisation de la machine et un fonctionnement durable.

Selon une caractéristique avantageuse de l'invention, la dimension de l'insert, mesurée suivant l'axe géométrique, est voisine de la dimension de la partie intérieure de la portion engageante suivant ce même axe. En outre, le dispositif de liaison peut comporter un seul élément fileté coopérant avec un écrou, ou encore deux éléments filetés. Il est ainsi possible de supprimer tous les jeux de montage, suivant l'axe géométrique, existant entre la portion engagée, la portion engageante et l'insert, ce qui augmente encore la sécurité d'utilisation et la durabilité de la machine. De plus, l'insert limite l'écrasement des portions engageante et engagée lors du serrage du dispositif de liaison, ce qui facilite leur démontage ultérieur.

D'autres caractéristiques et avantages de l'invention ressortiront de la description ci-après avec référence aux dessins annexés qui représentent, à titre d'exemple non limitatif, plusieurs formes de réalisation du rotor selon l'invention.

Sur ces dessins :
- la figure 1 représente une vue de dessus d'une machine de fenaison conforme à l'invention, comportant au moins un rotor muni de bras oscillants;
- la figure 2 représente une vue partielle en perspective d'un rotor conforme à l'invention, un seul bras oscillant étant représenté en totalité;
- la figure 3 représente une vue en coupe partielle d'une première variante de réalisation d'un dispositif de liaison conforme à l'invention;
- la figure 4 représente une vue de la première variante de réalisation du dispositif de liaison suivant la coupe IV-IV de la figure 2 ;
- la figure 5 représente une vue d'une deuxième variante de réalisation du dispositif de liaison suivant la coupe V-V de la figure 2 ;
- la figure 6 représente une vue d'une troisième variante de réalisation du dispositif de liaison suivant la coupe VI-VI de la figure 2 ;
- la figure 7 représente une vue d'une quatrième variante de réalisation du dispositif de liaison suivant la coupe VII-VII de la figure 2 ;
- la figure 8 représente une autre vue de la première variante de réalisation du dispositif de liaison suivant la coupe VIII-VIII de la figure 2 ;
- la figure 9 représente une autre vue de la deuxième variante de réalisation du dispositif de liaison suivant la coupe IX-IX de la figure 2 ;

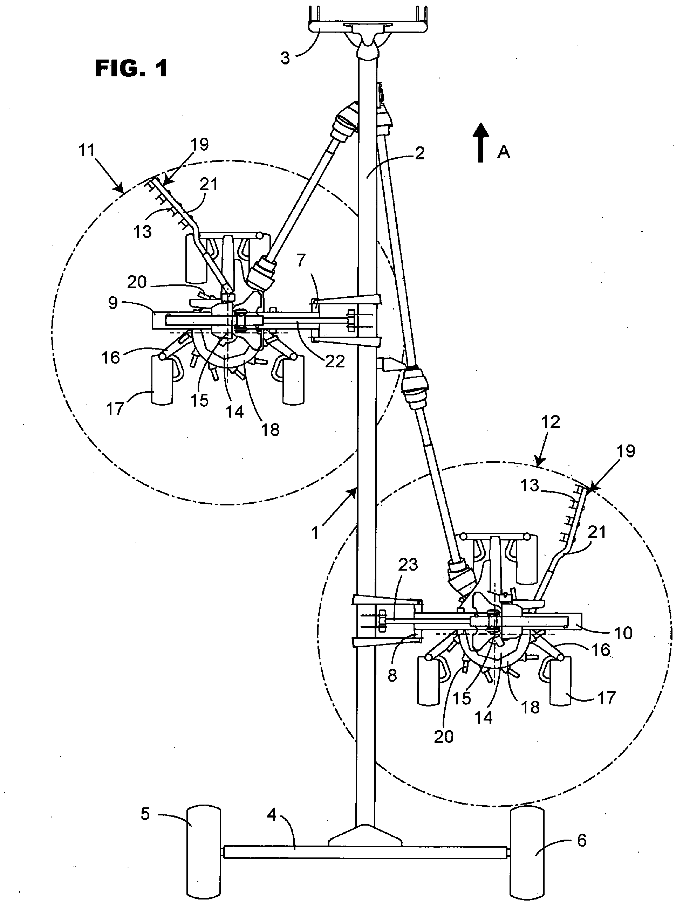

Telle qu'elle est représentée sur la figure 1, la machine selon l'invention est une andaineuse de végétaux couchés sur le sol. Elle comporte une structure porteuse (1) comprenant une poutre centrale (2) qui possède à son extrémité avant un dispositif d'attelage (3) pour l'accrocher à un tracteur, non représenté, permettant de déplacer la machine dans une direction d'avancement (A). Dans la suite de la description, la notion « avant » est définie par rapport à la direction d'avancement (A).

La poutre centrale (2) possède à son extrémité arrière une traverse (4) munie de roues (5 et 6) qui roulent sur le sol. Sur chaque côté de la poutre centrale (2) est articulé, au moyen d'un axe (7, 8) sensiblement horizontal, un bras (9, 10) qui porte un rotor (11, 12) avec des outils de travail (13) destinés à andainer des produits tels que de l'herbe ou de la paille fauchée se trouvant sur le sol. Dans l'exemple représenté, les bras (9 et 10) et les rotors (11 et 12) correspondant sont décalés dans la direction d'avancement (A). Les végétaux andainés par le rotor (11) le plus en avant peuvent être repris par le rotor (12) le plus en arrière pour la formation d'un andain unique de plus grand volume.

La poutre centrale (2) pourrait ne comporter qu'un seul bras et qu'un seul rotor. Elle pourrait aussi ne comporter aucun bras et qu'un seul rotor porté directement par la poutre centrale (2). La poutre centrale (2) pourrait aussi comporter, de chaque côté, deux bras décalés avec des longueurs différentes et portant chacun un rotor. Dans ce cas, la machine comporterait quatre rotors qui lui permettraient d'atteindre une largeur de travail plus importante.

Les rotors (11 et 12) sont sensiblement identiques. Chacun comporte un carter (14) qui est lié au bras (9, 10) correspondant et qui porte un axe de rotation (15) central sensiblement vertical ou légèrement incliné vers l'avant. Cet axe de rotation (15) comporte à son extrémité inférieure un support (16) avec des roues porteuses (17) situées sous le rotor (11, 12). Ces dernières roulent sur le sol durant le travail et font suivre les dénivellations du sol aux rotors (11 et 12). Le support (16) et les roues porteuses (17) peuvent avantageusement coulisser le long de l'axe de rotation (15) de manière à régler la distance des outils de travail (13) par rapport au sol, par exemple au moyen d'un vérin.

Sur la partie de l'axe de rotation (15), qui s'étend en-dessous du carter (14), est disposé un boîtier (18). Celui-ci est monté sur l'axe de rotation (15) à l'aide de roulements afin de pouvoir être entraîné en rotation. Le côté supérieur du boîtier (18) est muni d'une roue dentée qui se situe dans le carter (14). Cette roue engrène avec un pignon, lequel peut être relié à une prise de force du tracteur à l'aide d'arbres de transmission intermédiaires connus de l'homme de l'art. L'entraînement en rotation du rotor (11, 12) pourrait également être effectué avec un moteur hydraulique ou électrique. Le boîtier (18) supporte une multitude de bras oscillants (19). Ceux-ci s'étendent en forme de rayons par rapport à l'axe de rotation (15), dans un plan sensiblement perpendiculaire à celui-ci. Les bras oscillants (19) comportent au moins deux parties, une partie interne (20) liée au boîtier et une partie externe (21) portant les outils de travail (13) tels que des fourches. Les parties internes (20) des bras oscillants (19) sont liées au boîtier (18) par un ou plusieurs paliers de manière à pouvoir tourner sur elles-mêmes. Sur la partie de l'axe de rotation (15) qui se situe dans le boîtier (18) est montée une came fixe destinée à commander les bras oscillants (19) durant le travail d'andainage. Pour cela, chacun des bras oscillants (19) possède à son extrémité qui s'étend à l'intérieur du boîtier (18), un levier avec un galet qui est guidé dans une gorge de la came. Au travail, les outils de travail (13) ramassent les produits notamment sur la partie avant de leur trajectoire et les déposent sous la forme d'un andain dans la partie latérale de leur trajectoire.

Chaque bras est équipé d'un vérin hydraulique (22, 23) qui permet de le pivoter autour de l'axe (7, 8). Chaque vérin hydraulique (22, 23) est articulé avec une de ses extrémités sur la poutre centrale (2) et avec son autre extrémité sur le bras (9, 10) correspondant. Chaque vérin hydraulique (22, 23) peut être à double effet de manière à pouvoir être commandé lors de l'allongement et lors du raccourcissement, et permet de déplacer le bras (9, 10) correspondant entre une position de transport et une position de travail. Dans la position de transport, chaque rotor (11, 12) s'étend dans un plan sensiblement vertical ou proche de la verticale, de sorte que l'encombrement de la machine est réduit en largeur. Dans la position de travail, chaque rotor (11, 12) s'étend dans un plan sensiblement horizontal.

Dans les variantes de réalisation décrites, les bras oscillants (19) présentent une section circulaire. Toutefois, des bras oscillants (19) de section parallélépipédique, ovale ou autre sont possibles, cette liste n'étant pas limitative. D'autres formes plus élaborées sont envisageables, telles qu'un profil rainuré ou un profil « en citron » connu de l'homme de l'art.

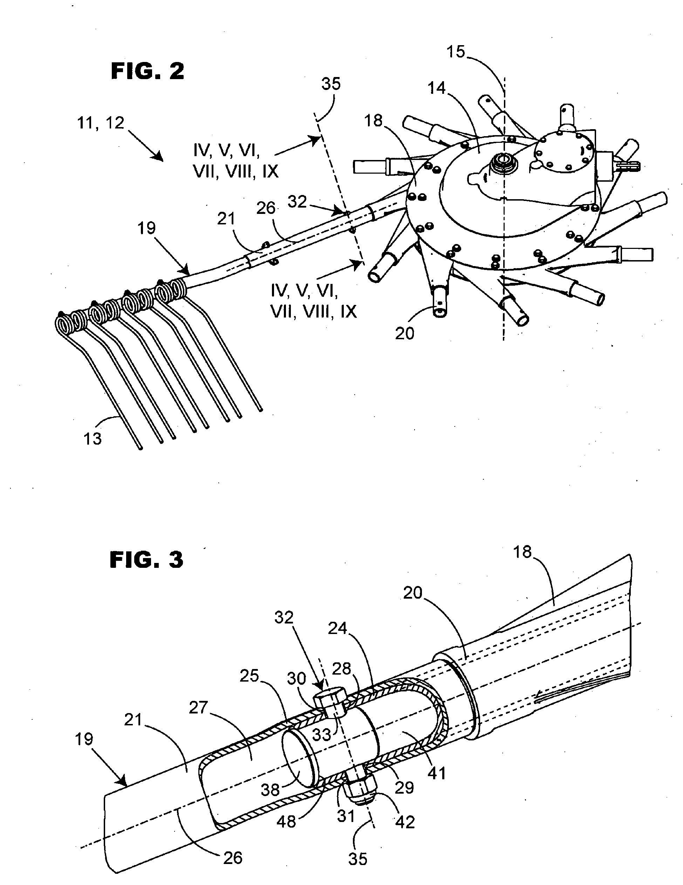

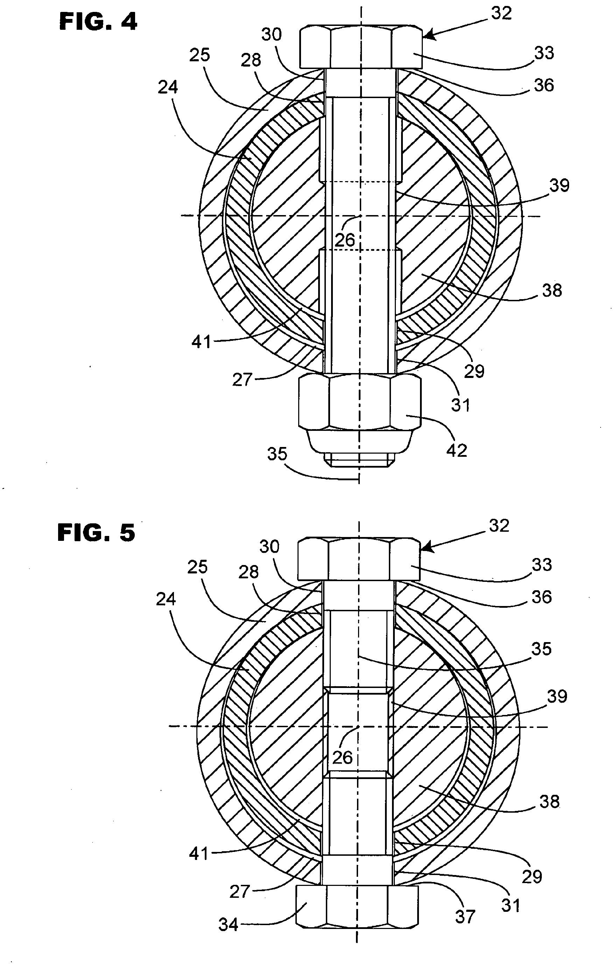

Tel que cela est représenté notamment sur la figure 3, la partie interne (20) du bras oscillant (19) comporte une portion engageante (24) tandis que la partie externe (21) comporte une portion engagée (25). Suivant une variante de réalisation non représentée, il serait possible que la portion engageante (24) soit liée à la partie externe (21) et que la portion engagée (25) soit liée à la partie interne (20). On distingue sur la figure 3 que la portion engageante (24) s'étend depuis le boîtier (18) sur quelque distance suivant un axe longitudinal (26), lequel axe longitudinal (26) correspond sensiblement à l'axe autour duquel la partie interne (20) tourne sur elle-même par rapport au boîtier (18). La portion engagée (25) comporte un orifice (27) formé de préférence par le fait que la partie externe (21) est creuse. La partie externe (21) pourrait aussi être pleine et l'orifice (27) formé par enlèvement de matière dans la partie externe (21). Cet orifice (27) s'étend suivant l'axe longitudinal (26) et son diamètre est supérieur ou quasiment égal au diamètre extérieur de la portion engageante (24), de sorte que cette dernière puisse s'engager librement suivant l'axe longitudinal (26) partiellement à l'intérieur de l'orifice (27). Tel que cela ressort des différentes variantes de réalisation illustrées sur les figures 4 à 9, la portion engageante (24) et la portion engagée (25) comportent chacune au moins un trou (28, 29, 30, 31) orienté perpendiculairement à l'axe longitudinal (26). Le ou les trous (28, 29) de la portion engageante (24) et le ou les trous (30, 31) de la portion engagée (25) sont disposés en face l'un de l'autre ou les uns des autres. Un dispositif de liaison (32) permet de relier la portion engageante (24) et la portion engagée (25) entre elles. Ce dispositif de liaison (32) comporte au moins un élément fileté (33, 34) présentant un axe géométrique (35), lequel élément fileté (33, 34) comporte un épaulement (36, 37). Dans la variante de réalisation de la figure 4, l'élément fileté (33) est constitué par une vis à tête hexagonale et l'épaulement (36) est formé par la face inférieure de la tête. L'élément fileté (33, 34) présente un diamètre extérieur dont la valeur est légèrement inférieure ou égale au diamètre de chaque trou (28, 29, 30, 31). Par « légèrement inférieure », on entend que lesdits diamètres diffèrent d'une valeur inférieure à un millimètre, par exemple inférieure à cinq dixièmes de millimètres. De cette manière, l'élément fileté (33, 34) peut être introduit manuellement, sans effort important, à travers le ou les trous (28, 29) de la portion engageante (24) et à travers le ou les trous (30, 31) de la portion engagée (25). De plus, l'élément fileté (33, 34) est susceptible de transmettre une partie du couple de rotation exercé par la partie interne (20) sur la partie externe (21), par contact des trous (28, 29, 30, 31) avec la portion filetée de l'élément fileté (33, 34). Automatiquement, l'introduction de l'élément fileté (33, 34) à travers les trous (28, 29, 30, 31) oriente lesdites portions (24, 25) l'une par rapport à l'autre autour de l'axe longitudinal (26). De plus, la rotation de la partie interne (20) du bras oscillant (19) sur elle-même est transmise à la partie externe (21), et cette dernière ne peut pas se déplacer suivant l'axe longitudinal (26) lors du pivotement du boîtier (18) autour de l'axe de rotation (15).

Selon une caractéristique importante de l'invention, le dispositif de liaison (32) comporte un insert (38). L'insert (38) peut être en matière métallique ou synthétique et résulter d'opérations d'usinage, de moulage, de découpage ou de forgeage. Il comporte au moins un taraudage (39, 40) pouvant coopérer avec l'élément fileté (33, 34). La portion engageante (24) comporte une partie intérieure (41). Cette dernière est formée de préférence par le fait que la partie interne (20) du bras oscillant (19) est creuse. La partie intérieure (41) pourrait aussi être formée par enlèvement de matière dans la partie interne (20). L'insert (38) est conçu de telle sorte qu'il puisse être disposé dans la partie intérieure (41). La forme de l'insert (38) correspond à celle de la partie intérieure (41). L'insert (38) est orienté autour de l'axe longitudinal (26) de manière à ce que le taraudage (39, 40) soit dirigé colinéairement à l'axe géométrique (35) de l'élément fileté (33, 34). Ainsi qu'il ressort de la figure 3, l'insert (38) peut de plus être muni d'un épaulement (48) pouvant s'appuyer contre la portion engageante (24) suivant l'axe longitudinal (26) afin de faciliter le montage.

Les opérations de montage du bras oscillant (19) sont séquencées de la manière décrite comme suit. L'utilisateur dispose l'insert (38) dans la partie intérieure (41) de la portion engageante (24) pour que le ou les taraudages (39, 40) soient sensiblement en face du ou des trous (28, 29) de la portion engageante (24). Il engage ensuite partiellement la portion engageante (24) dans l'orifice (27) de la portion engagée (25), ou au contraire l'orifice (27) de la portion engagée (25) sur la portion engageante (24), jusqu'à ce que le ou les trous (30, 31) de la portion engagée (25) soient sensiblement en face du ou des trous (28, 29) de la portion engageante (24). Puis, l'utilisateur introduit l'élément fileté (33) à travers les trous (28, 30) ou bien l'élément fileté (33) à travers les trous (28, 30) et l'élément fileté (34) à travers les trous (29, 31). L'utilisateur visse ensuite le ou les éléments filetés (33, 34) dans le ou les taraudages (39, 40) de l'insert (38) pour que le ou les épaulements (36, 37) correspondants s'appuient sur la portion engagée (25) et que, du côté d'au moins un desdits épaulements (36, 37), la portion engagée (25) soit serrée contre la portion engageante (24) suivant l'axe géométrique (35).

Les figures 4 à 9 s'adressent à des variantes de réalisation dans lesquelles la portion engageante (24) et la portion engagée (25) comportent chacune deux trous (28 et 29, 30 et 31) orientés perpendiculairement à l'axe longitudinal (26).

De préférence, la portion engageante (24) et la portion engagée (25) comportent chacune deux trous (28 et 29, 30 et 31) et les trous (28 à 31) sont tous orientés suivant l'axe géométrique (35).

Selon une caractéristique avantageuse de l'invention, la dimension de l'insert (38), mesurée suivant l'axe géométrique (35), est voisine de la dimension de la partie intérieure (41) de la portion engageante (24) suivant ce même axe. Ceci signifie que ladite dimension de l'insert (38) peut être légèrement inférieure, égale ou légèrement supérieure à ladite dimension de la partie intérieure (41). Par « légèrement inférieure », on entend que l'insert (38) peut être monté dans la partie intérieure (41) avec un jeu d'ajustement positif et inférieur à quelques millimètres, de préférence inférieur à un millimètre, par exemple inférieur à cinq dixièmes de millimètres. Ce cas est illustré par la figure 4. Par « légèrement supérieure », on entend que l'insert (38) peut être monté dans la partie intérieure (41) avec un jeu d'ajustement négatif, c'est-à-dire avec serrage, d'une valeur absolue inférieure au dixième de millimètre, de préférence inférieure à cinq centièmes de millimètre. Ce léger serrage autorise le montage de l'insert (38) dans la partie intérieure (41) au moyen, par exemple, d'un maillet.

Dans la variante de réalisation de la figure 4, le dispositif de liaison (32) comporte un seul élément fileté (33), lequel traverse deux trous (30 et 31) de la portion engagée (25) et deux trous (28 et 29) de la portion engageante (24). Les trous (28 à 31) de chaque portion (24, 25) sont diamétralement opposés de sorte que tous les trous (28 à 31) des portions engageante et engagée (24 et 25) soient orientés suivant l'axe géométrique (35) de l'élément fileté (33). Le dispositif de liaison (32) comporte en sus un écrou (42). L'élément fileté (33) coopère avec l'écrou (42) appuyé sur la portion engagée (25), soit pour serrer la portion engageante (24) et la portion engagée (25) entre l'insert (38) et l'écrou (42), soit pour freiner l'élément fileté (33).

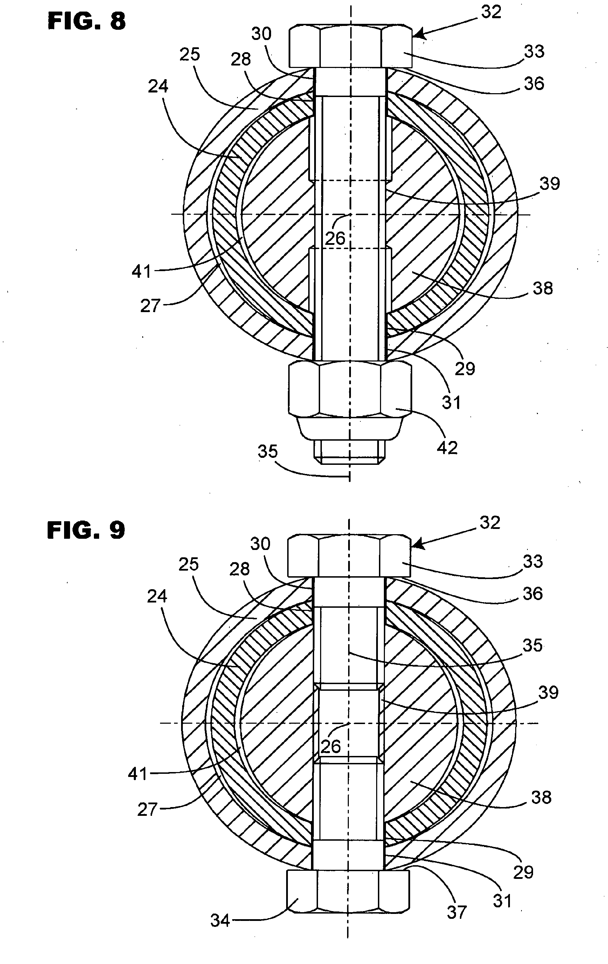

La figure 8 représente le cas où l'élément fileté (33) coopère avec l'écrou (42) appuyé sur la portion engagée (25) pour serrer la portion engageante (24) et la portion engagée (25) entre l'insert (38) et l'écrou (42). Dans ce cas, tous les jeux de montage existant, suivant l'axe géométrique (35), entre la portion engagée (25), la portion engageante (24) et l'insert (38), sont supprimés, au voisinage tant de l'épaulement (36) que de l'écrou (42). De plus, si l'insert (38) présente suivant l'axe géométrique (35), une dimension légèrement inférieure à celle de la partie intérieure (41) mesurée suivant le même axe, le serrage de l'écrou (42) entraîne une légère déformation des portions (24 et 25) dans leur domaine élastique, au voisinage de l'écrou (42). L'insert (38) limite alors l'écrasement des portions engageante et engagée (24 et 25), puisque la portion engageante (24) ne se déforme plus lorsqu'elle vient en appui sur l'insert (38). Si par contre, l'insert (38) est monté dans la partie intérieure (41) avec un jeu d'ajustement nul ou négatif, le serrage de l'écrou (42) entraîne, dans son voisinage, la seule déformation de la portion engagée (25) pour que celle-ci vienne en contact avec la portion engageante (24).

La figure 4 représente le cas où l'élément fileté (33) coopère avec l'écrou (42) appuyé sur la portion engagée (25) pour freiner l'élément fileté (33). Dans ce cas, une partie des jeux de montage existant, suivant l'axe géométrique (35), entre l'insert (38), la portion engagée (25), la portion engageante (24) et l'écrou (42), subsiste, et l'écrou joue le rôle de contre-écrou empêchant un desserrage intempestif de l'élément fileté (33) à l'intérieur du taraudage (39) de l'insert (38).

Dans les deux cas qui viennent d'être cités, l'emploi de l'écrou (42) augmente la sécurité d'utilisation et la durabilité de la machine.

Ainsi qu'il ressort des figures 5 à 7, le dispositif de liaison (32) peut comporter deux éléments filetés (33 et 34) avec chacun un épaulement (36, 37) et chaque élément fileté (33, 34) est vissé dans l'insert (38) de sorte que l'épaulement (36, 37) correspondant s'appuie sur la portion engagée (25). Sur ces figures, l'élément fileté (33) supérieur est serré de manière à ce que les portions engageante et engagée (24 et 25) soient serrées entre l'élément fileté (33) supérieur et l'insert (38).

Sur ces figures, l'élément fileté (34) inférieur est représenté partiellement serré. Dans ce cas, l'élément fileté (34) vise essentiellement à transmettre une partie du couple de rotation de la partie interne (20) vers la partie externe (21), par contact de la portion filetée dudit élément fileté (34) avec les trous (29) et (31). Cela évite donc de transmettre tout le couple de rotation par le seul élément fileté (33).

Tel que cela est représenté sur la figure 9, l'élément fileté (34) inférieur est serré davantage, à l'instar de l'élément fileté (33) supérieur. Ainsi, chaque élément fileté (33, 34) respectif serre la portion engageante (24) et la portion engagée (25) entre l'insert (38) et son épaulement (36, 37) respectif, de sorte qu'il ne subsiste aucun jeu de fonctionnement suivant l'axe géométrique (35). L'insert (38) limite alors l'écrasement des portions engageante et engagée (24 et 25).

Dans les variantes de réalisation des figures 4 et 5, l'insert (38) est une pièce rigide. Par pièce rigide, on entend que l'insert (38) subit, lors du serrage du dispositif de liaison (32), des déformations qui restent négligeables par rapport à celles que peuvent subir les portions engageante et engagée (24 et 25). Dans la variante de réalisation de la figure 4, l'insert (38) comporte un taraudage (39) dont la longueur est plus faible que la dimension de l'insert (38) mesurée suivant l'axe géométrique (35), c'est-à-dire plus faible que le diamètre de l'insert (38). L'insert (38) comporte deux trous non taraudés situés dans le prolongement du taraudage (39) et de part et d'autre de celui-ci, le diamètre desdits trous étant supérieur au diamètre intérieur du taraudage (39). De préférence, le taraudage (39) est sensiblement centré par rapport à l'axe longitudinal (26). Cette construction éloigne l'épaulement (36) et l'écrou (42) des premiers filets en prise de l'élément fileté (33) au niveau du taraudage (39). Elle réduit le risque de desserrage de l'élément fileté (33) et de l'écrou (42) induit, lors du fonctionnement, par les efforts exercés par les portions engageante et engagée (24 et 25) sur l'élément fileté (33).

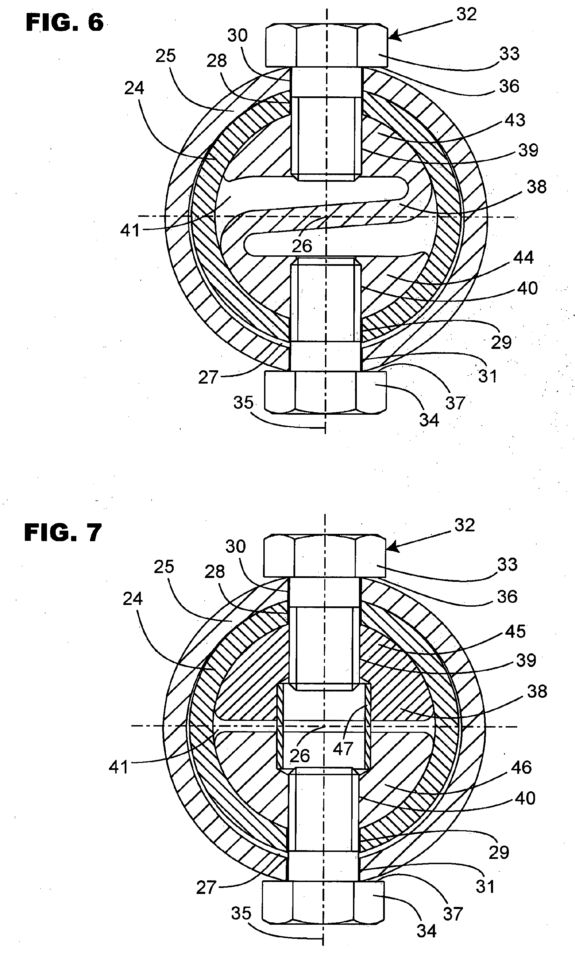

Les variantes de réalisation des figures 6 et 7 font appel à un insert (38) pouvant s'allonger élastiquement suivant l'axe géométrique (35). Dans ces variantes, l'insert (38) présente, suivant l'axe géométrique (35), une dimension avant montage qui peut être plus faible que, égale à ou plus grande que la dimension suivant ce même axe de la partie intérieure (41). Dans le cas où sa dimension avant montage est plus grande, l'insert (38) se comprime suivant l'axe géométrique (35) de manière à pouvoir s'engager dans la partie intérieure (41). Ainsi, l'insert (38) peut tenir de lui-même en place dans la portion engageante (24). Après avoir serré l'élément fileté (33) supérieur de sorte que la portion engageante (24) et la portion engagée (25) soient serrées entre l'insert (38) et l'élément fileté (33) supérieur, l'utilisateur vient serrer l'élément fileté (34) inférieur. Lors du serrage de ce dernier, l'insert (38) élastique peut s'allonger de manière à rattraper le jeu qui le sépare éventuellement de la portion engageante (24). Aussi, la portion engageante (24) se déforme très peu. L'essentiel des déformations est subi par la portion engagée (25) pour venir se plaquer contre la portion engageante (24). Dans les variantes de réalisation des figures 6 et 7, les contraintes mécaniques sur la portion engageante (24), induites par le serrage du dispositif de liaison (32), sont donc particulièrement faibles.

Dans la variante de réalisation de la figure 6, l'insert (38) est une pièce élastique en forme de S dont la branche supérieure (43) et la branche inférieure (44) comportent chacune leur propre taraudage (39 respectivement 40).

Dans la variante de réalisation de la figure 7, l'insert (38) comporte deux moitiés (45 et 46) distinctes pouvant se déplacer l'une par rapport à l'autre suivant l'axe géométrique (35). Les moitiés (45 et 46) comportent chacune un taraudage (39 respectivement 40) et s'éloignent l'une de l'autre suivant l'axe géométrique (35) lors du serrage du dispositif de liaison (32).

Dans cette même variante, les deux moitiés (45 et 46) distinctes sont de préférence assemblées au moyen d'un centreur (47) monté coulissant dans au moins une des moitiés (45, 46). Une telle construction facilite la mise en place de l'insert (38) dans la partie intérieure (41) de la portion engageante (24).

La description précédente se rapporte à une andaineuse de végétaux couchés sur le sol munie d'au moins un rotor d'andainage dont l'axe de rotation est de préférence vertical en position de travail. Toutefois, l'invention peut aussi se rapporter à une faneuse munie, en lieu et place dudit au moins un rotor d'andainage, d'au moins un rotor de fanage dont l'axe de rotation est par exemple incliné dans la direction d'avancement. Plus généralement, l'invention concerne toute machine de fenaison comportant au moins un rotor muni de bras portant des outils de travail. Une telle machine peut par exemple être une andaineuse, une presse ou une auto-chargeuse munie d'un organe de ramassage à doigts du type « pick-up » et qui comporte un rotor conforme à l'invention disposé par exemple à l'une des extrémités latérales dudit organe de ramassage. L'axe de rotation du rotor peut être disposé dans un plan vertical ou dans un plan horizontal.

Il est bien évident que l'invention n'est pas limitée aux formes de réalisation décrites ci-dessus et représentées sur les figures annexées. Des modifications restent possibles, notamment en ce qui concerne la constitution ou le nombre des divers éléments ou par substitution d'équivalents techniques, sans pour autant sortir du domaine de protection, limité par les revendications annexées.

## Revendications

1. Rotor pour une machine de fenaison, le rotor (11, 12) comportant un boîtier (18) entraîné en rotation lors du travail autour d'un axe de rotation (15) dirigé vers le haut et au moins un bras oscillant (19) disposé dans un plan sensiblement perpendiculaire à l'axe de rotation (15), lequel bras oscillant (19) comportant au moins deux parties, une partie interne (20) liée au boîtier (18) et une partie externe (21) portant des outils de travail (13), l'une des parties interne et externe (20 et 21) comportant une portion engageante (24) pouvant s'engager suivant un axe longitudinal (26) partiellement à l'intérieur d'un orifice (27) d'une portion engagée (25) de l'autre des parties interne et externe (20 et 21), la portion engageante (24) et la portion engagée (25) comportant chacune au moins un trou (28, 29, 30, 31) orienté perpendiculairement à l'axe longitudinal (26) et pouvant être reliées entre elles au moyen d'un dispositif de liaison (32), lequel dispositif de liaison (32) comportant au moins un élément fileté (33, 34) présentant un axe géométrique (35) et muni d'un épaulement (36, 37), lequel élément fileté (33, 34) traversant chaque trou (28, 29, 30, 31) des portions engageante et engagée (24 et 25), ***caractérisé en ce que*** le dispositif de liaison (32) comporte un insert (38) avec au moins un taraudage (39, 40) pouvant être disposé dans une partie intérieure (41) de la portion engageante (24), que l'élément fileté (33, 34) est vissé dans le taraudage (39, 40) et que l'épaulement (36, 37) s'appuie sur la portion engagée (25) de manière à serrer la portion engagée (25) contre la portion engageante (24) suivant l'axe géométrique (35).

2. Rotor selon la revendication 1, ***caractérisé en ce que*** l'élément fileté (33, 34) présente un diamètre extérieur dont la valeur est légèrement inférieure ou égale au diamètre de chaque trou (28, 29, 30, 31) des portions engageante et engagée (24 et 25).

3. Rotor selon la revendication 1 ou 2, ***caractérisé en ce que*** la portion engageante (24) et la portion engagée (25) comportent chacune deux trous (28 et 29, 30 et 31) orientés perpendiculairement à l'axe longitudinal (26).

4. Rotor selon la revendication 3, ***caractérisé en ce que*** la portion engageante (24) et la portion engagée (25) comportent chacune deux trous (28 et 29, 30 et 31) et que les trous (28 à 31) sont tous orientés suivant l'axe géométrique (35).

5. Rotor selon l'une quelconque des revendications 1 à 4, ***caractérisé en ce que*** suivant l'axe géométrique (35), la dimension de l'insert (38) est voisine de la dimension de la partie intérieure (41) de la portion engageante (24).

6. Rotor selon la revendication 4 ou 5, ***caractérisé en ce que*** le dispositif de liaison (32) comporte un seul élément fileté (33) et un écrou (42), que l'élément fileté (33) traverse les trous (28 et 29) de la portion engageante (24) et les trous (30 et 31) de la portion engagée (25) et coopère avec l'écrou (42) appuyé sur la portion engagée (25) pour serrer la portion engageante (24) et la portion engagée (25) entre l'insert (38) et l'écrou (42).

7. Rotor selon la revendication 4 ou 5, ***caractérisé en ce que*** le dispositif de liaison (32) comporte un seul élément fileté (33) et un écrou (42), que l'élément fileté (33) traverse les trous (28 et 29) de la portion engageante (24) et les trous (30 et 31) de la portion engagée (25) et coopère avec l'écrou (42) appuyé sur la portion engagée (25) pour freiner l'élément fileté (33).

8. Rotor selon la revendication 6 ou 7, ***caractérisé en ce que*** le taraudage (39) présente une longueur plus faible que la dimension de l'insert (38) mesurée suivant l'axe géométrique (35).

9. Rotor selon l'une quelconque des revendications 3 à 5, ***caractérisé en ce que*** le dispositif de liaison (32) comporte deux éléments filetés (33 et 34) avec chacun un épaulement (36, 37) et que chaque élément fileté (33, 34) est vissé dans l'insert (38) de sorte que l'épaulement (36, 37) correspondant s'appuie sur la portion engagée (25).

10. Rotor selon l'une quelconque des revendications 1 à 9, ***caractérisé en ce que*** l'insert (38) est une pièce rigide.

11. Rotor selon la revendication 4 ou 5, ***caractérisé en ce que*** l'insert (38) peut s'allonger élastiquement suivant l'axe géométrique (35).

12. Rotor selon la revendication 11, ***caractérisé en ce que*** l'insert (38) est une pièce élastique en forme de S.

13. Rotor selon la revendication 11, ***caractérisé en ce que*** l'insert (38) comporte deux moitiés (45 et 46) distinctes pouvant se déplacer l'une par rapport à l'autre suivant l'axe géométrique (35).

14. Rotor selon la revendication 13, ***caractérisé en ce que*** les deux moitiés (45 et 46) distinctes sont assemblées au moyen d'un centreur (47) monté coulissant dans au moins une des moitiés (45 et 46).

15. Rotor selon l'une quelconque des revendications 9 à 14, ***caractérisé en ce que*** chaque élément fileté (33, 34) respectif serre la portion engageante (24) et la portion engagée (25) entre l'insert (38) et son épaulement (36, 37) respectif.

16. Rotor selon l'une quelconque des revendications 1 à 15, ***caractérisé en ce que*** l'insert (38) comporte un épaulement (48) pouvant s'appuyer contre la portion engageante (24) suivant l'axe longitudinal (26).

17. Machine de fenaison comportant au moins un rotor (11, 12) selon l'une quelconque des revendications 1 à 16.

## Patentansprüche

1. Rotor für eine Heuwerbungsmaschine, wobei der Rotor (11, 12) ein Gehäuse (18), das bei der Arbeit um eine nach oben gerichtete Drehachse (15) in Drehung angetrieben wird, und mindestens einen Schwenkarm (19), der in einer zur Drehachse (15) im Wesentlichen senkrechten Ebene angeordnet ist, aufweist, wobei der Schwenkarm (19) mindestens zwei Abschnitte, einen mit dem Gehäuse (18) verbundenen inneren Abschnitt (20) und einen Arbeitswerkzeuge (13) tragenden äußeren Abschnitt (21), aufweist, wobei einer der inneren und äußeren Abschnitte (20 und 21) ein Außenteil (24) aufweist, das gemäß einer Längsachse (26) teilweise in eine Öffnung (27) eines Innenteils (25) des anderen der inneren und äußeren Abschnitte (20 und 21) eingreifen kann, wobei der Außenteil (24) und der Innenteil (25) jeweils mindestens eine Bohrung (28, 29, 30, 31) aufweisen, die senkrecht zur Längsachse (26) ausgerichtet ist und die mittels einer Verbindungsvorrichtung (32) miteinander verbunden werden können, wobei die Verbindungsvorrichtung (32) mindestens ein gewindetes Element (33, 34) mit einer geometrischen Achse (35) aufweist und mit einem Absatz (36, 37) ausgestattet ist, wobei das gewindete Element (33, 34) jede Bohrung (28, 29, 30, 31) des Außenteils und des Innenteils (24 und 25) durchquert, ***dadurch gekennzeichnet*, dass** die Verbindungsvorrichtung (32) ein Einsatzteil (38) mit mindestens einem Innengewinde (39, 40) aufweist, das in einem inneren Abschnitt (41) des Außenteils (24) angeordnet werden kann, dass das gewindete Element (33, 34) in das Innengewinde (39, 40) geschraubt ist und dass sich der Absatz (36, 37) auf dem Innenteil (25) derart abstützt, dass der Innenteil (25) gemäß der geometrischen Achse (35) gegen den Außenteil (24) gespannt ist.

2. Rotor nach Anspruch 1, ***dadurch gekennzeichnet,* dass** das gewindete Element (33, 34) einen Außendurchmesser aufweist, dessen Wert etwas kleiner als der oder gleich dem Durchmesser jeder Bohrung (28, 29, 30, 31) des Außenteils und Innenteils (24 und 25) ist.

3. Rotor nach Anspruch 1 oder 2, ***dadurch gekennzeichnet*, dass** der Außenteil (24) und der Innenteil (25) jeweils zwei Bohrungen (28 und 29, 30 und 31) aufweisen, die senkrecht zur Längsachse (26) ausgerichtet sind.

4. Rotor nach Anspruch 3, ***dadurch gekennzeichnet*, dass** der Außenteil (24) und der Innenteil (25) jeweils zwei Bohrungen (28 und 29, 30 und 31) aufweisen und dass alle Bohrungen (28 bis 31) gemäß der geometrischen Achse (35) ausgerichtet sind.

5. Rotor nach irgend einem der Ansprüche 1 bis 4, ***dadurch gekennzeichnet*, dass** die Größe des Einsatzteils (38) gemäß der geometrischen Achse (35) etwa der Größe des inneren Abschnitts (41) des Außenteils (24) entspricht.

6. Rotor nach Anspruch 4 oder 5, ***dadurch gekennzeichnet,* dass** die Verbindungsvorrichtung (32) ein einziges gewindetes Element (33) und eine Mutter (42) aufweist, dass das gewindete Element (33) die Bohrungen (28 und 29) des Außenteils (24) und die Bohrungen (30 und 31) des Innenteils (25) durchquert und mit der auf dem Innenteil (25) abgestützten Mutter (42) zusammenarbeitet, um den Außenteil (24) und den Innenteil (25) zwischen dem Einsatzteil (38) und der Mutter (42) zu spannen.

7. Rotor nach Anspruch 4 oder 5, ***dadurch gekennzeichnet,* dass** die Verbindungsvorrichtung (32) ein einziges gewindetes Element (33) und eine Mutter (42) aufweist, dass das gewindete Element (33) die Bohrungen (28 und 29) des Außenteils (24) und die Bohrungen (30 und 31) des Innenteils (25) durchquert und mit der auf dem Innenteil (25) abgestützten Mutter (42) zusammenarbeitet, um das gewindete Element (33) zu bremsen.

8. Rotor nach Anspruch 6 oder 7, ***dadurch gekennzeichnet*, dass** das Innengewinde (39) eine Länge aufweist, die kleiner als die gemäß der geometrischen Achse (35) gemessene Größe des Einsatzteils (38) ist.

9. Rotor nach irgend einem der Ansprüche 3 bis 5, ***dadurch gekennzeichnet*, dass** die Verbindungsvorrichtung (32) zwei gewindete Elemente (33 und 34) mit jeweils einem Absatz (36, 37) aufweist und dass jedes gewindete Element (33, 34) im Einsatzteil (38) derart verschraubt ist, dass sich der entsprechende Absatz (36, 37) auf dem Innenteil (25) abstützt.

10. Rotor nach irgend einem der Ansprüche 1 bis 9, ***dadurch gekennzeichnet*, dass** das Einsatzteil (38) ein starres Teil ist.

11. Rotor nach Anspruch 4 oder 5, ***dadurch gekennzeichnet*, dass** sich das Einsatzteil (38) gemäß der geometrischen Achse (35) elastisch verlängern kann.

12. Rotor nach Anspruch 11, ***dadurch gekennzeichnet*, dass** das Einsatzteil (38) ein elastisches Teil in S-Form ist.

13. Rotor nach Anspruch 11, ***dadurch gekennzeichnet*, dass** das Einsatzteil (38) zwei unterschiedliche Hälften (45 und 46) aufweist, die sich gemäß der geometrischen Achse (35) zueinander bewegen können.

14. Rotor nach Anspruch 13, ***dadurch gekennzeichnet*, dass** die zwei unterschiedlichen Hälften (45 und 46) mittels einer Zentriervorrichtung (47) zusammengesetzt sind, die in mindestens einer der Hälften (45 und 46) gleitend montiert ist.

15. Rotor nach irgend einem der Ansprüche 9 bis 14, ***dadurch gekennzeichnet,* dass** jedes jeweilige gewindete Element (33, 34) den Außenteil (24) und den Innenteil (25) zwischen dem Einsatzteil (38) und seinem jeweiligen Absatz (36, 37) spannt.

16. Rotor nach irgend einem der Ansprüche 1 bis 15, ***dadurch gekennzeichnet*, dass** das Einsatzteil (38) einen Absatz (48) aufweist, der sich gemäß der Längsachse (26) auf dem Außenteil (24) abstützen kann.

17. Heuwerbungsmaschine, die mindestens einen Rotor (11, 12) nach irgend einem der Ansprüche 1 bis 16 aufweist.

## Claims

1. Rotor for a haymaking machine, the rotor (11, 12) comprising a housing (18) driven in rotation during work about a rotation axis (15) directed upwards, and at least one oscillating arm (19) arranged in a plane substantially perpendicular to the rotation axis (15), the said oscillating arm (19) comprising at least two parts, an internal part (20) connected to the housing (18) and an external part (21) carrying work tools (13), one of the internal and external parts (20 and 21) comprising an engaging portion (24) able to engage along a longitudinal axis (26) partially inside an orifice (27) of an engaged portion (25) of the other of the internal and external parts (20 and 21), the engaging portion (24) and the engaged portion (25) each comprising at least one hole (28, 29, 30, 31) oriented perpendicularly to the longitudinal axis (26) and being able to be connected with one another by means of a connecting device (32), the said connecting device (32) comprising at least one threaded element (33, 34) having a geometric axis (35) and provided with a shoulder (36, 37), the said threaded element (33, 34) passing through each hole (28, 29, 30, 31) of the engaging and engaged portions (24 and 25), ***characterized in* that** the connecting device (32) comprises an insert (38) with at least one tapping (39, 40) which can be arranged in an interior part (41) of the engaging portion (24), that the threaded element (33, 34) is screwed in the tapping (39, 40), and that the shoulder (36, 37) rests on the engaged portion (25) so as to tighten the engaged portion (25) against the engaging portion (24) along the geometric axis (35).

2. Rotor according to Claim 1, ***characterized in* that** the threaded element (33, 34) has an exterior diameter, the value of which is slightly less than or equal to the diameter of each hole (28, 29, 30, 31) of the engaging and engaged portions (24 and 25).

3. Rotor according to Claim 1 or 2, ***characterized in* that** the engaging portion (24) and the engaged portion (25) each comprise two holes (28 and 29, 30 and 31) oriented perpendicularly to the longitudinal axis (26).

4. Rotor according to Claim 3, ***characterized in* that** the engaging portion (24) and the engaged portion (25) each comprise two holes (28 and 29, 30 and 31), and that the holes (28 to 31) are all oriented along the geometric axis (35).

5. Rotor according to any one of Claims 1 to 4, ***characterized in* that** along the geometric axis (35), the dimension of the insert (38) is close to the dimension of the interior part (41) of the engaging portion (24).

6. Rotor according to Claim 4 or 5, ***characterized in* that** the connecting device (32) comprises a single threaded element (33) and a nut (42), that the threaded element (33) passes through the holes (28 and 29) of the engaging portion (24) and the holes (30 and 31) of the engaged portion (25) and cooperates with the nut (42) resting on the engaged portion (25) to tighten the engaging portion (24) and the engaged portion (25) between the insert (38) and the nut (42).

7. Rotor according to Claim 4 or 5, ***characterized in* that** the connecting device (32) comprises a single threaded element (33) and a nut (42), that the threaded element (33) passes through the holes (28 and 29) of the engaging portion (24) and the holes (30 and 31) of the engaged portion (25) and cooperates with the nut (42) resting on the engaged portion (25) to brake the threaded element (33).

8. Rotor according to Claim 6 or 7, ***characterized in* that** the tapping (39) has a length smaller than the dimension of the insert (38) measured along the geometric axis (35).

9. Rotor according to any one of Claims 3 to 5, ***characterized in* that** the connecting device (32) comprises two threaded elements (33 and 34) each with a shoulder (36, 37), and that each threaded element (33, 34) is screwed in the insert (38) so that the corresponding shoulder (36, 37) rests on the engaged portion (25).

10. Rotor according to any one of Claims 1 to 9, ***characterized in* that** the insert (38) is a rigid part.

11. Rotor according to Claim 4 or 5, ***characterized in* that** the insert (38) can lengthen elastically along the geometric axis (35).

12. Rotor according to Claim 11, ***characterized in* that** the insert (38) is an S-shaped elastic part.

13. Rotor according to Claim 11, ***characterized in* that** the insert (38) comprises two distinct halves (45 and 16) able to move one with respect to the other along the geometric axis (35).

14. Rotor according to Claim 13, ***characterized in* that** the two distinct halves (45 and 46) are assembled by means of a centring device (47) slidably mounted in at least one of the halves (45 and 46).

15. Rotor according to any one of Claims 9 to 14, ***characterized in* that** each respective threaded element (33, 34) tightens the engaging portion (24) and the engaged portion (25) between the insert (38) and its respective shoulder 36, 37).

16. Rotor according to any one of Claims 1 to 15, ***characterized in* that** the insert (38) comprises a shoulder (48) which can rest against the engaging portion (24) along the longitudinal axis (26).

17. Haymaking machine comprising at least one rotor (11, 12) according to any one of Claims 1 to 16.
